# EUROPÄISCHE PATENTANMELDUNG

(11) **EP 2 667 064 A1**
(43) Veröffentlichungstag der Anmeldung: **27.11.2013**
(21) Anmeldenummer: 12168640.6
(22) Anmeldetag: 21.05.2012
(51) Int. Cl.: F16J 15/46

(54) **Dichtungssystem und Generator mit dem Dichtungssystem zum Abdichten eines Spalts**

(71) Anmelder: Siemens Aktiengesellschaft, 80333 München (DE)
(72) Erfinder: Aydin, Ergün, 40789 Monheim (DE); Bornträger, Marek, 41747 Viersen (DE); Haag, Dominique, 45897 Gelsenkirchen (DE); Hallek, Jan, 45479 Mülheim (DE); Schmitz, Volker, 47447 Moers (DE); Soriano Rodriguez, Elena, 45468 Mülheim an der Ruhr (DE); Zhang, Ya, 44869 Bochum (DE); Zimmermann, Adam, 45478 Mülheim a.d. Ruhr (DE)

(57) **Zusammenfassung**

Die Erfindung betrifft ein Dichtungssystem zum Abdichten eines Spalts (7), der von zwei einander zugewandten und im Abstand voneinander angeordneten Dichtflächen (8, 9) gebildet ist, wobei mit dem Spalt (7) ein Hochdruckraum (6) und ein Niederdruckraum (19) fluidleitend verbindbar ist und das Dichtungssystem einen Dichtungskörper (13) aus einem elastischen Material und eine Dichtungsplatte (11) aufweist, die den Spalt (7) an den beiden Dichtflächen (8, 9) überbrückt und in Längsrichtung des Spalts (7) festgelegt ist sowie dem Hochdruckraum (6) zugewandt eine dritte Dichtfläche (12) aufweist, an der zusammen mit den anderen beiden Dichtflächen (8, 9) der Dichtungskörper (13) fluiddicht anlegbar ist, der an der der dritten Dichtfläche (12) abgewandten und dem Hochdruckraum zugewandten Seite eine derart geformte Aussparung (14) aufweist, dass mittels des Druckunterschieds (18) zwischen dem Hochdruckraum (6) und dem Niederdruckraum (19) der Dichtungskörper (13) an die Dichtflächen (8, 9, 12) fluiddicht pressbar ist.

## Beschreibung

Die Erfindung betrifft ein Dichtungssystem zum Abdichten eines Spalts, der von zwei einander zugewandten und im Abstand voneinander angeordneten Dichtflächen gebildet ist, und einen Generator, der zum Abdichten seines Innenraums gegen die Umgebung mit dem Dichtungssystem ausgestattet ist.

Ein Generator weist einen Rotor mit elektrischen Leitern auf, die bei dem Betrieb des Generators sich erwärmen. Um eine Überhitzung des Generators zu unterbinden, ist der Generator mit einem Kühlkreislauf ausgestattet, mit dem die Wärme von dem Generator abgeführt wird. Insbesondere wird in dem Kühlkreislauf als ein Trägermedium für die Wärme Wasserstoff zirkuliert, mit dem der Innenraum des Generators durchströmt wird. Das Verwenden von dem Wasserstoff als das Trägermedium ist insbesondere deshalb vorteilhaft, da mit dem Wasserstoff aufgrund seiner hohen Wärmeaufnahmefähigkeit ein guter Abtransport der Wärme bewerkstelligbar ist sowie aufgrund der geringen Viskosität des Wasserstoffs lediglich geringe Reibungsverluste beim Umwälzen des Trägermediums entstehen. Um ein Austreten des Trägermediums aus dem Generator zu verhindern, ist der Generator und der Kühlkreis entsprechend dicht auszuführen.

Insbesondere ist eine Abdichtung von Bauteilen eines Kühlers des Kühlkreislaufs gegen Bauteile des Generators problematisch, da die Bauteile des Generators eine wesentlich höhere Betriebstemperatur als die Bauteile des Kühlers haben. Beim Anfahren des Generators werden die Bauteile des Generators stärker erwärmt als die Bauteile des Kühlers, so dass die Bauteile des Generators eine stärkere Wärmeausdehnung erfahren als die Bauteile des Kühlers, wodurch sich eine Relativbewegung zwischen den Bauteilen des Generators und denen des Kühlers einstellt. In analoger Weise stellt sich eine Relativbewegung zwischen den Bauteilen des Kühlers und denen des Generators beim Abfahren des Generators ein. Hiervon betroffen ist insbesondere die Wasserstoffkühlerdichtung an der Unterseite des Generators, die beim An- und Abfahren des Generators Undichtigkeiten haben kann. Zu Erhöhung der Dichtwirkung der Wasserstoffkühlerdichtung ist es bekannt den Einbauraum der Wasserstoffkühlerdichtung zu verkleinern, wodurch das Material der Wasserstoffkühlerdichtung zusammengedrückt und dadurch die Flächenpressung der Wasserstoffkühlerdichtung auf ihre Dichtflächen erhöht wird. Allerdings ist der Grad der Verformung der Wasserstoffkühlerdichtung auf ein zulässiges Maß begrenzt, wodurch sich lediglich eine kurzfristige Erhöhung der Dichtwirkung erzielen lässt.

Aufgabe der Erfindung ist es, ein Dichtungssystem zum Abdichten eines Spalts an zwei einander zugewandten Dichtflächen und einen Generator mit dem Dichtungssystem zu schaffen, wobei das Dichtungssystem über einen langen Zeitraum eine hohe Dichtigkeit hat.

Die Aufgabe wird gelöst mit den Merkmalen der Patentansprüche 1 und 11. Bevorzugte Ausgestaltungen dazu sind in den weiteren Patentansprüchen angegeben.

Das erfindungsgemäße Dichtungssystem ist zum Abdichten eines Spalts geeignet, der von zwei einander zugewandten und im Abstand voneinander angeordneten Dichtflächen gebildet ist, wobei mit dem Spalt ein Hochdruckraum und ein Niederdruckraum fluidleitend verbindbar sind. Das Dichtungssystem weist einen Dichtungskörper und eine Dichtungsplatte auf, die den Spalt an den beiden Dichtflächen überbrückt und in Längsrichtung des Spalts festgelegt ist sowie dem Hochdruckraum zugewandt eine dritte Dichtfläche aufweist, an der zusammen mit den anderen beiden Dichtflächen der Dichtungskörper fluiddicht anlegbar ist, der an der der dritten Dichtfläche abgewandten und dem Hochdruckraum zugewandten Seite eine derart geformte Aussparung aufweist, dass mittels des Druckunterschieds zwischen dem Hochdruckraum und dem Niederdruckraum der Dichtungskörper an die Dichtflächen fluiddicht pressbar ist. Der erfindungsgemäße Generator weist das Dichtungssystem auf, wobei der Hochdruckraum der mit Wasserstoff gefüllte Innenraum des Generators und der Niederdruckraum die Umgebung des Generators ist, so dass mit dem Dichtungssystem der Generator gegen seine Umgebung wasserstoffdicht abgedichtet ist.

Bevorzugtermaßen sind die Breite der Dichtflächen im Wesentlichen gleich groß. An den ersten beiden Dichtflächen ist bevorzugtermaßen der Spalt verbreitert ausgebildet, so dass von den drei Dichtflächen eine Dichtungskammer abgegrenzt ist. Es ist bevorzugt, dass die Dichtungskammer einen rechteckigen Querschnitt hat. Die Aussparung ist bevorzugtermaßen von zwei Flanken begrenzt, die die Aussparungen V-förmig im Querschnitt ausbilden.

Der Spalt ist bevorzugt ringförmig und der Dichtungskörper entsprechend dem ringförmigen Verlauf des Spalts als ein Dichtungsring ausgebildet. Ferner ist es bevorzugt, dass die Aussparung als eine umlaufende Nut ausgebildet ist. Am Grund der Nut ist bevorzugtermaßen ein O-Ring angeordnet. Hierbei ist es bevorzugt, dass der O-Ring in dem Dichtungsring unter einer radial nach innen gerichteten Vorspannung montiert ist. Die Nut ist mit ihren Flanken bevorzugtermaßen derart geformt, dass aufgrund von Selbsthemmung der O-Ring innerhalb der Nut gehalten ist.

Zwischen dem Hochdruckraum und dem Niederdruckraum herrscht der Druckunterschied. Dieser Druckunterschied ist von dem Dichtungskörper überbrückt. Dadurch, dass der Dichtungskörper die Aussparung aufweist und aus dem elastischen Material ist, ist der Dichtungskörper gegen alle drei Dichtflächen gedrückt. Hierbei kann eine Verformung des Dichtungskörpers einhergehen, so dass der Dichtungskörper flächig an die Dichtflächen angepresst ist.

Der Wasserstoff in dem Innenraum des Generators hat einen Druck von 5 bis 8,5 bar Überdruck gegenüber der Umgebung. Dieser Überdruck wirkt erfindungsgemäß abdichtend in dem Dichtungssystem, da mit dem Überdruck die Aussparung derart druckbeaufschlagt ist, dass der Dichtungskörper an die Dichtflächen wasserstoffdicht gepresst ist.

Die Dichtungskammer ist von den drei Dichtflächen gebildet, wobei die dritte Dichtfläche dem Hochdruckraum zugewandt angeordnet ist. Dadurch wirken die von dem Druckunterschied in der Aussparung des Dichtungskörpers verursachten Druckkräfte in dem Dichtungskörper im Wesentlichen senkrecht auf die Dichtflächen, wodurch der Druckkörper von dem Druckunterschied in die Druckkammer gedrückt ist. Dabei kann sich der Dichtungskörper innerhalb der Dichtungskammer derart verformen und an die Dichtflächen anschmiegen, dass eine fluiddichte Abdichtung der Dichtungskammer und somit des Spalts erzielt ist.

Je höher der Druckunterschied ist, desto höher sind die Anforderungen an die Dichtwirkung des Dichtungssystems. Dadurch, dass bei dem hohen Druckunterschied die Anpressung des Dichtungskörpers an die Dichtflächen hoch ist, nimmt die Dichtwirkung des Dichtungssystems analog zur Größe des Druckunterschieds zu. Dadurch ist vorteilhaft das Dichtungssystem geeignet den hohen Wasserstoffdruck im Innenraum des Generators gegen seine Umgebung abzudichten.

Mit Hilfe des O-Rings ist der Dichtungsring mit einer radial nach innen gerichteten Vorspannung gegen die radial innenliegende Dichtfläche montiert. Außerdem ist der O-Ring innerhalb der Nut am Nutgrund angeordnet, so dass mit der Außenkontur des O-Rings und den Nutflanken der Nut eine Oberflächenform definiert ist, die vorteilhaft entsprechend derart gestaltbar ist, dass aufgrund der Druckbeaufschlagung dieser Oberfläche durch den Druckunterschied der Dichtungsring mit homogener Flächenpressung an die Dichtflächen angedrückt ist.

Im Folgenden wird eine bevorzugte Ausführungsform des erfindungsgemäßen Generators mit dem erfindungsgemäßen Dichtungssystem anhand der beigefügten schematischen Zeichnungen erläutert. Es zeigen:
- Figur 1: eine perspektivische Darstellung eines Dichtungsrings des Dichtungssystems,
- Figur 2: eine perspektivische, geschnittene Darstellung des Dichtungsrings aus Figur 1,
- Figur 3: einen Querschnitt des Generators mit dem Dichtungssystem,
- Figur 4: Detail IV aus Figur 3 und
- Figur 5: Detail V aus Figur 4.

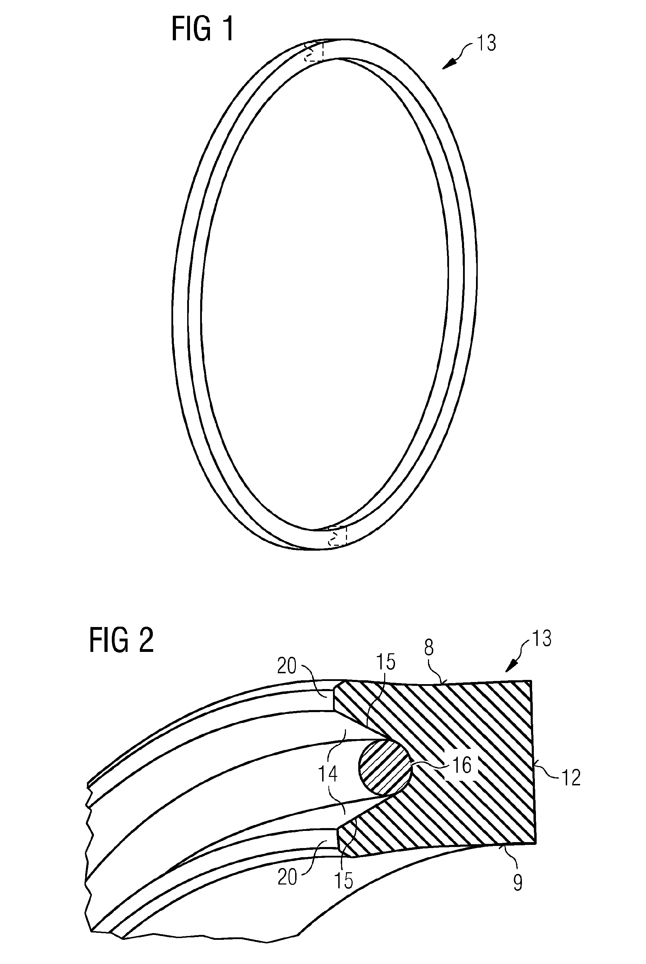

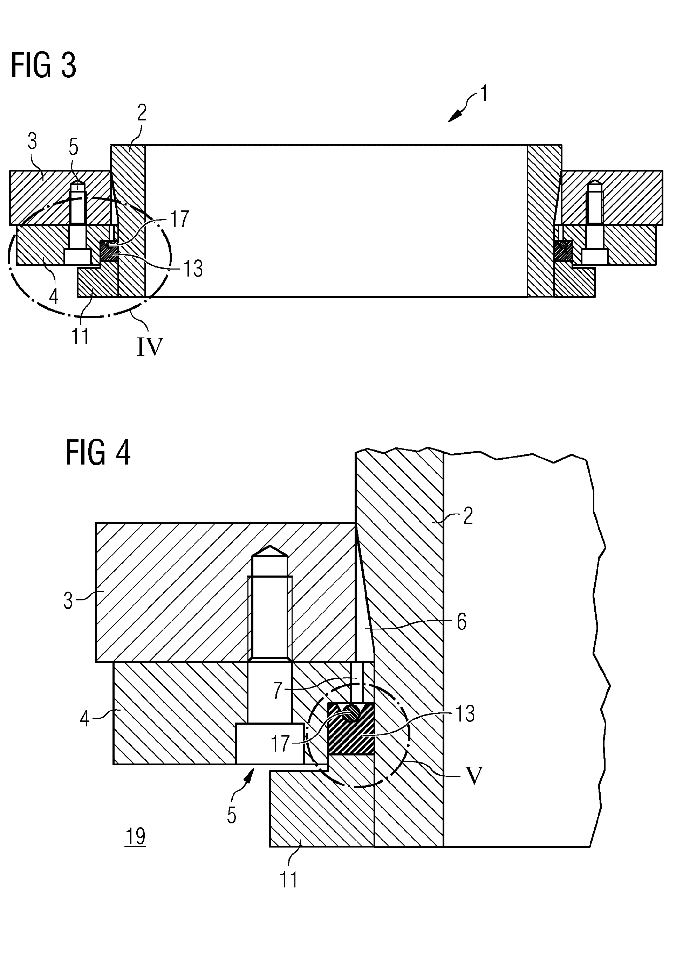

Wie es aus Figuren 1 bis 5 ersichtlich ist, weist ein Generator 1 eine Kühlerwand 2 auf, an der hierzu konzentrisch und radial nach außen vorstehend ein Außenring 3 angebracht ist. An dem Außenring 3 ist ein Druckrahmen 4 angeordnet, der mittels einer Schraubverbindung 5 mit dem Außenring 3 befestigt ist. Zwischen der radial innenliegenden Seite des Außenrings 3 und der radial außenliegenden Fläche der Kühlerwand 2 ist ein Zwischenraum 6 ausgebildet, der mit Wasserstoff aus dem Innenraum des Generators 1 mit 5 bis 8,5 bar beaufschlagt ist. Der Druckrahmen 4 ist radial im Abstand von der Außenfläche der Kühlerwand 2 angeordnet, so dass ein Spalt 7, der zwischen dem Druckrahmen 4 und der Außenseite der Kühlerwand 3 liegt, in den Zwischenraum 6 mündet. Somit ist der Spalt 7 analog wie der Zwischenraum 6 mit dem Wasserstoff beaufschlagt. In Axialrichtung des Generators 1 gesehen dem Zwischenraum 6 abgewandt ist in den Spalt 7 mündend eine Dichtungskammer 10 ausgebildet, die in Radialrichtung eine größere Erstreckung als der Spalt 7 hat. Dies wird dadurch erreicht, dass in dem Druckrahmen 4 eine radial nach außen sich erstreckende Aussparung ausgebildet ist, die einen stufenartigen Übergang zum Spalt 7 bildet. Ferner ist dies erreicht durch einen radial nach außen vorstehenden Vorsprung an der Kühlerwand 2, wodurch ein stufenartiger Übergang von dem Zwischenraum 6 in den Spalt 7 und von dem Spalt 7 in die Dichtungskammer 10 erreicht ist. Durch die stufenartigen Übergänge der Dichtungskammer 10 in den Spalt 7 ist jeweils eine Abstützfläche an dem Druckrahmen 4 und dem Vorsprung der Kühlerwand 2 ausgebildet, wobei die Abstützflächen dem Spalt 7 abgewandt angeordnet sind.

An die Abstützflächen schließen sich jeweils eine Dichtfläche 8, 9 an, wobei von der Aussparung in dem Druckrahmen 4 die erste Dichtfläche 8 und an der Außenseite der Kühlerwand 2 die zweite Dichtfläche 9 definiert sind. Die Dichtflächen 8, 9 sind konzentrisch zur Achse des Generators 1 ausgebildet, wobei die erste Dichtfläche 8 radial außenseitig und die zweite Dichtfläche 9 radial innenseitig angeordnet sind, wodurch die Radialerstreckung der Dichtungskammer 10 definiert ist. Dadurch, dass die Dichtflächen 8, 9 Kreiszylinderflächen sind, ist die Dichtungskammer 10 als ein Ringraum ausgebildet.

In der Dichtungskammer 10 ist eine Dichtungsplatte 11 angeordnet, die mit ihrem Vorsprung den Abstand zwischen der ersten Dichtfläche 8 und der zweiten Dichtfläche 9 überbrückt. Die Stirnseite des Vorsprungs der Dichtungsplatte 11 bildet eine dritte Dichtfläche 12, so dass von den Dichtflächen 8, 9 und 12 sowie den Abstützflächen die Dichtungskammer 10 begrenzt ist. Die Dichtungsplatte 11 ist in Axialrichtung festgelegt.

Der Vorsprung der Dichtungsplatte 11, der zwischen der ersten Dichtfläche 8 und der zweiten Dichtfläche 9 angeordnet ist, kann in seiner Radialerstreckung etwas kleiner als der Abstand zwischen der ersten Dichtfläche 8 und der zweiten Dichtfläche 9 sein. Dies ist insbesondere dann vorteilhaft, wenn aufgrund von unterschiedlicher thermischer Ausdehnung beim Betrieb des Generators 1 die Kühlerwand 2 und der Druckrahmen 4 eine Relativbewegung zueinander erfahren, so dass der Abstand zwischen den Dichtflächen 8, 9 über die Zeit nicht konstant ist. Durch eine entsprechend kleinere Ausbildung des Vorsprungs der Dichtungsplatte 11 kann ein unvorteilhaftes Verklemmen des Vorsprungs der Dichtungsplatte 11 in der Dichtungskammer 10 unterbunden werden.

In der Dichtungskammer 10 ist ein Dichtungsring 13 angeordnet, der aus einem elastischen Material hergestellt ist. Der Querschnitt des Dichtungsrings 13 ist an den quadratischen Querschnitt der Dichtungskammer 10 passgenau angepasst, wobei der Dichtungsring 13 an seiner den Spalt 7 zugewandten Seite eine umlaufende Nut 14 als eine Aussparung aufweist. Die Nut 14 ist von zwei Nutflanken 15 und einem Nutgrund 16 gebildet, wobei in der Nut 14 auf dem Nutgrund 16 ein O-Ring 17 angeordnet ist. Der O-Ring 17 ist mit einer radial nach innen wirkenden Vorspannung montiert. Die Nutflanken 15 sind V-förmig zueinander angeordnet, wobei der die Form des Nutgrunds 16 dem kreisförmigen Querschnitt des O-Rings 17 nachempfunden ist. Insbesondere die innenliegende Nutflanke 15 ist derart zur Achse des Generators 1 geneigt, dass der O-Ring 17 aufgrund von Selbsthaftung an dem Nutgrund 16 verbleibt. Durch die V-förmige Anordnung der Nutflanken 15 öffnet sich die Nut 14 zum Spalt 7 hin, wodurch den Abstützflächen des Druckrahmens 4 und der Kühlerwand 2 zugewandte Lippen 20 des Dichtungsrings 13 ausgebildet sind.

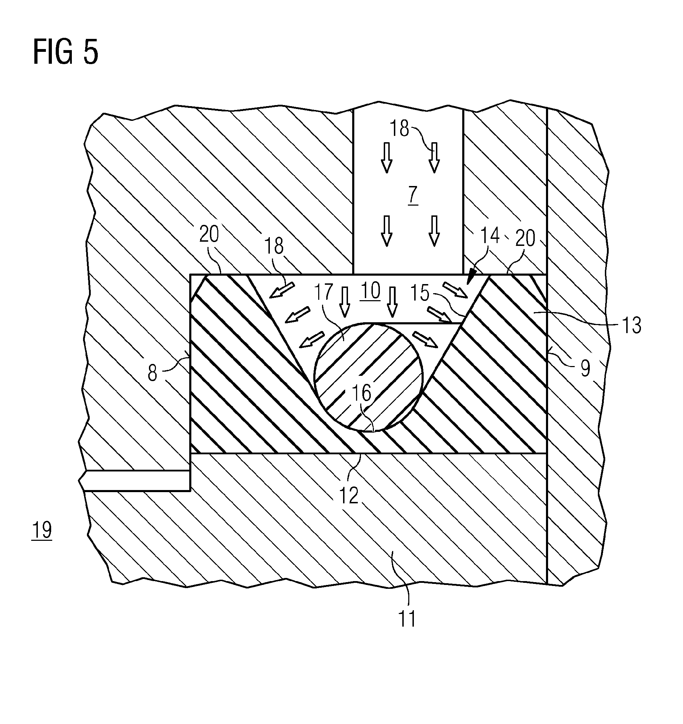

Der Zwischenraum 6 und der Spalt 7 sind mit dem Wasserstoff druckbeaufschlagt, so dass der von dem Dichtungsring 13 freigelassene Raum der Dichtungskammer 19 ebenfalls mit dem Wasserstoff druckbeaufschlagt ist. Dieser Raum ist im Wesentlichen durch die Form der Nutflanken 15 und der freiliegenden Oberfläche des O-Rings 17 definiert. Der Überdruck des Wasserstoffs zur Umgebung 19 des Generators 1 ist Pfeilen angedeutet, die mit dem Bezugszeichen 18 in Fig. 5 gekennzeichnet sind. Der Druck 18 wirkt auf die Nutflanken 15 und der freiliegenden Oberfläche des O-Rings 17 so, dass der Dichtungsring 13 sowohl in Richtung zur dritten Dichtfläche 12 als auch zur ersten Dichtfläche 8 und zur zweiten Dichtfläche 9 gedrückt wird. Dabei kann sich der Dichtungsring 13 in der Dichtungskammer 10 parallel zur ersten Dichtfläche 8 und zur zweiten Dichtfläche 9 in Richtung zur dritten Dichtfläche 12 hin verschieben. Dadurch, dass der Dichtungsring 13 an seiner den Abstützflächen zugewandten Seite jeweils mit der Lippe 20 ausgebildet ist, werden aufgrund des Gasdrucks 18 die Lippen 20 nach außen gedrückt, so dass die radial außenliegende Lippe 20 an die erste Dichtfläche 8 und die radial innenliegende Lippe 20 an die zweite Dichtfläche 9 gedrückt werden. Somit sind die Dichtflächen 8, 9, 12 von dem Dichtungsring 13 flächig kontaktiert, wodurch eine hohe Dichtwirkung des Dichtungsrings 13 erzielt ist.

Durch die V-förmige Anordnung der Nutflanken 15 ist der Querschnitt des Dichtungsrings 13 Y-förmig, wodurch der Dichtungsring 13 von dem Gasdruck 18 effektiv in Radialrichtung verformbar ist. Der Durchmesser des O-Rings 17 ist derart bestimmt, dass eine vorherbestimmte Vorspannung des Dichtungsrings 13 gegen die zweite Dichtfläche 9 erreicht ist. Ferner ist der Durchmesser des Querschnitts des O-Rings 17 derart bestimmt, dass eine vorherbestimmte Vorspannung des Dichtungsrings 13 gegen die erste Dichtfläche 8 erzielt ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dichtungssystem zum Abdichten eines Spalts (7), der von zwei einander zugewandten und im Abstand voneinander angeordneten Dichtflächen (8, 9) gebildet ist,
wobei mit dem Spalt (7) ein Hochdruckraum (6) und ein Niederdruckraum (19) fluidleitend verbindbar ist und das Dichtungssystem einen Dichtungskörper (13) aus einem elastischen Material und eine Dichtungsplatte (11) aufweist, die den Spalt (7) an den beiden Dichtflächen (8, 9) überbrückt und in Längsrichtung des Spalts (7) festgelegt ist,
sowie dem Hochdruckraum (6) zugewandt eine dritte Dichtfläche (12) aufweist, an der zusammen mit den anderen beiden Dichtflächen (8, 9) der Dichtungskörper (13) fluiddicht anlegbar ist, der an der der dritten Dichtfläche (12) abgewandten und dem Hochdruckraum zugewandten Seite eine derart geformte Aussparung (14) aufweist, dass mittels des Druckunterschieds (18) zwischen dem Hochdruckraum (6) und dem Niederdruckraum (19) der Dichtungskörper (13) an die Dichtflächen (8, 9, 12) fluiddicht pressbar ist.

2. Dichtungssystem gemäß Anspruch 1,
wobei die Breite der Dichtflächen (8, 9, 13) im Wesentlichen gleich groß sind.

3. Dichtungssystem gemäß Anspruch 1 oder 2,
wobei an den ersten beiden Dichtflächen (8, 9) der Spalt (7) verbreitert ausgebildet ist, so dass von den drei Dichtflächen (8, 9, 12) eine Dichtungskammer (10) abgegrenzt ist.

4. Dichtungssystem gemäß Anspruch 3,
wobei die Dichtungskammer (10) einen rechteckigen Querschnitt hat.

5. Dichtungssystem gemäß einem der Ansprüche 1 bis 4, wobei die Aussparung (14) von zwei Flanken (15) begrenzt ist, die die Aussparung V-förmig im Querschnitt ausbilden.

6. Dichtungssystem gemäß einem der Ansprüche 1 bis 5, wobei der Spalt (7) ringförmig und der Dichtungskörper entsprechend dem ringförmigen Verlauf des Spalts (7) als ein Dichtungsring (13) ausgebildet ist.

7. Dichtungssystem gemäß Anspruch 6,
wobei die Aussparung als eine umlaufende Nut (14) ausgebildet ist.

8. Dichtungssystem gemäß Anspruch 7,
wobei am Grund (16) der Nut (14) ein O-Ring (17) angeordnet ist.

9. Dichtungssystem gemäß Anspruch 8,
wobei der O-Ring (17) in dem Dichtungsring (13) unter einer radial nach innen gerichteten Vorspannung montiert ist.

10. Dichtungssystem gemäß Anspruch 9,
wobei die Nut (14) mit ihren Flanken (15) derart geformt ist, dass aufgrund von Selbsthemmung der O-Ring (17) innerhalb der Nut (14) gehalten ist.

11. Generator mit dem Dichtungssystem gemäß einem der Ansprüche 1 bis 10,
wobei Hochdruckraum (6) der mit Wasserstoff gefüllte Innenraum des Generators (1) und der Niederdruckraum die Umgebung(19) des Generators ist, so dass mit dem Dichtungssystem der Generator (1) gegen seine Umgebung (19) wasserstoffdicht abgedichtet ist.
